# EUROPEAN PATENT APPLICATION

(11) **EP 0 624 026 A1**
(43) Date of publication of application: **09.11.1994**
(21) Application number: 93401186.7
(22) Date of filing: 07.05.1993
(51) Int. Cl.: H04N 1/21, H04N 5/76

(54) **Method and tape recorder for still picture recording**

(71) Applicant: THOMSON multimedia, 92400 Courbevoie (FR)
(72) Inventor: Tazine, Nour-Eddine, F-67115 Plobsheim (FR)
(74) Representative: Einsel, Robert, Dipl.-Ing.

(57) **Abstract**

Now there are photo CD players on the market. Such players and photo CD's do have high prices. In addition, the user cannot store in his home photos on such photo CD's. Currently, there are 4-head VCR's on the market with excellent 'still picture' feature and frame by frame advance, the letter only in play mode.
According to the invention an automatic picture index management can be added to such VCR's. Usually, the VCR is connected to a TV set. If the VCR is switched to the photo mode, the VCR displays on the TV set user instructions for handling the storage and search of such photos on the VCR. The camera and/or an according input/output circuit within the VCR are adapted for receiving and output of such still pictures.

## Description

### Background

Now there are photo CD players on the market (CD: compact disc). Such players and photo CD's do have high prices. In addition, the user can not store in his home photos on such photo CD's. Only a specific standard is allowed.

### Invention

It is an object of the invention to disclose a method for still picture recording which is cheap, uses cheap storage media and which can operate in the user's home. This object is reached by the method disclosed in claim 1.

It is a further object of the invention to disclose an apparatus which utilises the inventive method. This object is reached by the apparatus disclosed in claim 4.

Currently, there are 4-head VCR's on the market with excellent 'still picture' feature and frame by frame advance, the letter only in play mode. For example, the VH 5270 type VCR of THOMSON is such a device.
According to the invention an automatic picture index management can be added to such VCR's. Usually, the VCR is connected to a TV set. If the VCR is switched to the photo mode, the VCR displays on the TV set user instructions for handling the storage and search of such photos on the VCR. The camera and/or an according input/output circuit within the VCR are adapted for receiving and output of such still pictures. Instead of a camera an optical sensor unit may be used in which the photo is inserted.

Of cause, the picture quality of such (analogue) recorded photos can not be as high as with a photo CD player, but there are applications in which the much cheaper and quicker solution should be preferred. This is especially true, where a user wants to record photos in his home without spending time and efforts for visiting a dealer.

In principle the inventive method consists in still picture recording, wherein a tape recorder is used to store or replay still pictures received from an optical sensor unit - especially a camera - and wherein said still pictures are stored on or read from the tape using automatic indexing and possibly other picture related information and said still pictures are displayed on a display device - especially a TV set - on which also (intermediately) user guide information for storing or searching said still pictures and/or the index information and/or said other picture related information is displayed.

Advantageous additional embodiments of the inventive method are resulting from the respective dependent claims.

In principle the inventive tape recorder for still picture recording comprises an automatic indexing unit generating index information which is stored on or read from the tape together with still pictures and possibly other information related to said pictures which are received from an optical sensor unit - especially a camera - and which are displayed on a display device - especially a TV set - on which also (intermediately) user guide information and/or the index information and/or said other picture related information is displayed.

Advantageous additional embodiments of the inventive apparatus are resulting from the respective dependent claims.

### Drawing

Preferred embodiments of the invention are described with reference to the accompanying drawing, which shows in:

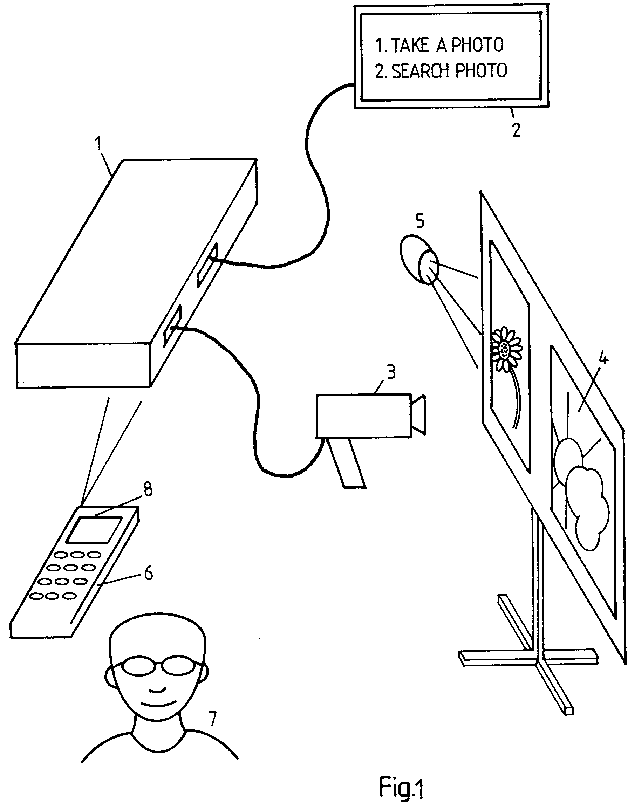

- Fig. 1: video photo processing arrangement.

### Preferred embodiments

A VCR 1 is connected to a display 2, e.g. a TV set and to a camera 3, e.g. a 'camescope' for generating still pictures 4. The camera is focused on the photo which shall be stored on the tape. A user 7 receives VCR-generated messages from the display, handles the camera and controls the VCR via a remote control 6. The photo is lit with a lamp 5.

Taking into account the features of a VCR mentioned above one can modify the VCR in such a way that it makes picture-by-picture records, wherein an index management automatically stores corresponding data on the tape so that a user can have a directory of the stored photos and can access them easily (Video PHOTO device).
An appropriate user interface includes for example respective modifications on the VCR remote control (special knob for stepping through the stored photos, knobs for making name inputs), user guide on the TV display controlled by the VCR and the information stored on tape (menu which allows to take a photo, index number input or name input for searching a specific photo).
The stored or evaluated information on/from the tape may include category and subject of each photo.

The Video Photo Album feature makes VCR's much more attractive for a majority of users.

The remote control may have a display 8 for showing the information normally displayed on the TV screen or for showing independently therefrom the current index number, name, subject or category of the photo displayed. In this case, there is a bi-directional IR communication between remote control and VCR.

Advantageously the necessary connections between camera, VCR and TV set (and remote control) are already existent. At minimum, only software modifications are required to establish the Video Photo Album feature.

Because VCR's normally in still picture mode do step after a certain time to the next picture to avoid damage of the tape, the inventive VCR may comprise a picture and data memory in which the photo and its corresponding information is stored before the tape moves on or the drum is switched off.

## Claims

1. Method for still picture recording, **characterised in** that a tape recorder (1) is used to store or replay still pictures (4) received from an optical sensor unit (3) - especially a camera - and that said still pictures are stored on or read from the tape using automatic indexing and possibly other picture related information and said still pictures are displayed on a display device (2) - especially a TV set - on which also (intermediately) user (7) guide information for storing or searching said still pictures and/or the index information and/or said other picture related information is displayed.

2. Method according to claim 1, **characterised in** that said tape recorder (1) is controlled by a bi-directional remote control having display means (8) on which said user guide information and/or the current index number, name, subject or category of said still picture is displayed.

3. Method according to claim 1 or 2, **characterised in** that said tape recorder (1) comprises a picture and data memory means in which said still picture and its corresponding information is stored.

4. Tape recorder (1) for still picture recording, related to a method according to any of claims 1 to 3, comprising an automatic indexing unit generating index information which is stored on or read from the tape together with still pictures (4) and possibly other information related to said pictures which are received from an optical sensor unit (3) - especially a camera - and which are displayed on a display device (2) - especially a TV set - on which also (intermediately) user (7) guide information and/or the index information and/or said other picture related information is displayed.
